# EUROPEAN PATENT APPLICATION

(11) **EP 4 382 583 A1**
(43) Date of publication of application: **12.06.2024**
(21) Application number: 22853170.3
(22) Date of filing: 04.08.2022
(51) Int. Cl.: C09K 5/14

(54) **COLD STORAGE MATERIAL**

(30) Priority: 05.08.2021 JP 2021129389
(71) Applicant: Panasonic Holdings Corporation, Osaka 571-8501 (JP)
(72) Inventor: MACHIDA, Hironobu, Kadoma-shi Osaka 571-0057 (JP); SUZUKI, Motohiro, Kadoma-shi Osaka 571-0057 (JP)
(74) Representative: Grünecker Patent- und Rechtsanwälte PartG mbB
(86) International application number: PCT/JP2022/030029
(87) International publication number: WO 2023/013752

(57) **Abstract**

A cold storage material of the present disclosure contains tetrahydrofuran, water, and a thickening and gelling agent. The ratio of the content of the tetrahydrofuran to the total amount of the content of the tetrahydrofuran and the content of the water is 0.16 or more and 0.24 or less on a mass basis. The thickening and gelling agent includes a main component composed only of locust bean gum and xanthan gum.

## Description

### TECHNICAL FIELD

The present disclosure relates to a cold storage material.

### BACKGROUND ART

Patent Literature 1 discloses a heat storage gel material including a heat storage liquid and a shape retainer. The heat storage liquid has a heat storage main agent dispersed in water and has a predetermined phase transition temperature. The shape retainer has a network structure of organic molecules and is formed of agar used in a ratio of 0.2 weight% or more to the heat storage liquid. Examples of the heat storage main agent include tetrahydrofuran (THF). Patent Literature 1 describes Examples (see Ninth Example, etc.) in which a THF 30 weight% aqueous solution and an agar are used.

Patent Literature 2 discloses a heat storage material that has a first gelling material, a second gelling material, and an inorganic or water-based heat storage material. The second gelling material has a water holding capacity different from that of the first gelling material, and is mixed in the first gelling material. The inorganic or water-based heat storage material is held in the first gelling material and the second gelling material. As the first gelling material, a synthetic polymer such as a polyacrylamide derivative or a crosslinked gelatin is used. As the second gelling material, a naturally-occurring polymer such as a polysaccharide, an agar, or a gelatin is used. As the polysaccharide, locust bean gum, xanthan gum, gellan gum, or carrageenan is used.

### CITATION LIST

### Patent Literature

| | |
|---|---|
| Patent Literature 1: | WO 2016/190333 |
| Patent Literature 2: | WO 2014/091938 |

### SUMMARY OF INVENTION

### Technical Problem

The present disclosure provides a cold storage material that is advantageous from the viewpoint of gel strength and suppression of occurrence of syneresis during use while containing tetrahydrofuran.

### Solution to Problem

A cold storage material in the present disclosure includes:
tetrahydrofuran;
water; and
a thickening and gelling agent, wherein
a ratio of a content of the tetrahydrofuran to a total amount of the content of the tetrahydrofuran and a content of the water is 0.16 or more and 0.24 or less on a mass basis, and
the thickening and gelling agent includes a main component composed only of locust bean gum and xanthan gum.

### Advantageous Effects of Invention

The cold storage material in the present disclosure is likely to have desired gel strength and elasticity due to the action of the above thickening and gelling agent, and thus, is advantageous from the viewpoint of suppression of occurrence of syneresis during use while containing tetrahydrofuran.

### BRIEF DESCRIPTION OF THE DRAWINGS

FIG. 1 is a graph showing properties during cold release of a cold storage material in Embodiment 1.
FIG. 2 is a diagram of a cooler box in Embodiment 3.

### DESCRIPTION OF EMBODIMENTS

### (Findings, etc., as the base of the present disclosure)

At the time when the inventors conceived of the present disclosure, there was a possibility that a cold storage material that is liquid at normal temperature may contaminate an article when the container of the cold storage material is damaged during storage, keeping, and transportation. Therefore, in the industry, in order to prevent the cold storage material from leaking and contaminating an article when the container of the cold storage material is damaged, it was a common practice to add a thickening and gelling agent to the cold storage material to thicken the cold storage material or cause gelling of the cold storage material. Under such circumstances, the present inventors, taking a hint from the fact that the heat of fusion of a clathrate hydrate of tetrahydrofuran is large, came up with an idea of producing a cold storage material that contains tetrahydrofuran, water, and a thickening and gelling agent. Then, the present inventors found that there was a problem that, in order to realize the idea, syneresis is prone to occur during use of the cold storage material that contains tetrahydrofuran, water, and a thickening and gelling agent, and in order to solve the problem, devised the configuration of the subject of the present disclosure.

Therefore, the present disclosure provides a cold storage material that is advantageous from the viewpoint of gel strength and suppression of occurrence of syneresis during use while containing tetrahydrofuran.

Hereinafter, embodiments will be described in detail with reference to the drawings. However, detailed description more than necessary may be omitted. For example, detailed description of a matter that is already well known, or redundant description of a substantially identical configuration, may be omitted.

The appended drawings and the following description are provided in order to allow a person skilled in the art to sufficiently understand the present disclosure, and are not intended to limit the subject set forth in the claims.

### (Embodiment 1)

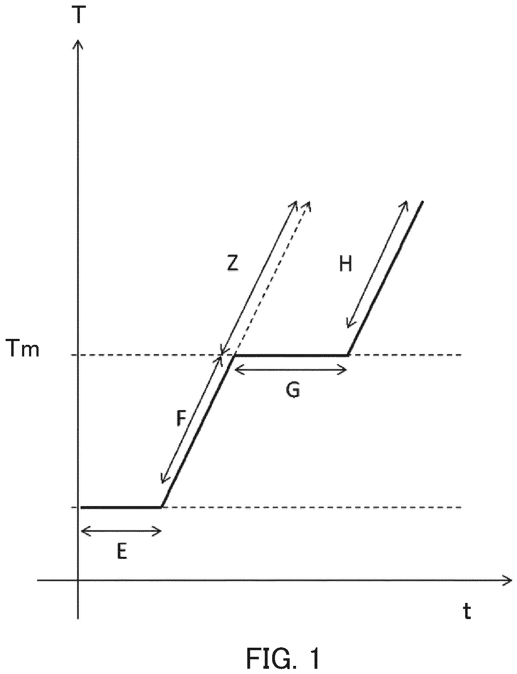

Hereinafter, Embodiment 1 will be described with reference to FIG. 1.

### [1-1. Configuration]

A cold storage material in Embodiment 1 contains tetrahydrofuran (THF), water, and a thickening and gelling agent. In this cold storage material, the ratio of the content of the THF to the total amount of the content of the THF and the content of the water is 0.16 or more and 0.24 or less on a mass basis. The thickening and gelling agent includes a main component composed only of locust bean gum and xanthan gum. In the present description, the "main component" means a component that is contained in the largest amount on a mass basis.

In the cold storage material, THF and water can form a clathrate hydrate. The clathrate hydrate is a crystal in which a guest molecule, which is a substance other than water, is disposed in a cage-like structure formed by hydrogen-bonded water molecules. A concentration of guest molecules corresponding to a state where water molecules and guest molecules are present with neither excess nor shortage for formation of a clathrate hydrate is called a congruent concentration. When the guest molecule in the clathrate hydrate is THF, the congruent concentration is about 19 mass%. In the cold storage material in Embodiment 1, the above ratio is 0.16 or more and 0.24 or less, and thus, the content of the THF is adjusted to the congruent concentration or around the congruent concentration.

As is well known in the technical field of cold storage materials, the melting point of a cold storage material can be measured by using a differential scanning calorimeter (DSC), for example.

FIG. 1 is a graph showing properties of the cold storage material during cold release in Embodiment 1, and shows temporal change in the temperature of the cold storage material when the cold storage material is heated from a state where THF and water have been crystallized as a THF hydrate in advance. In FIG. 1, the horizontal axis and the vertical axis show time t and temperature T, respectively. In a zone E shown in FIG. 1, the temperature of the cold storage material is maintained at a temperature of a melting point Tm or lower. For example, the temperature inside a cooler box is set to the melting point Tm or lower such that, while the lid of the cooler box is closed, the temperature of the cold storage material disposed inside the cooler box is maintained at the melting point Tm or lower.

Next, the cold storage material is gradually warmed. Refer to a zone F in FIG. 1. For example, at the end of the zone E, i.e., at the beginning of the zone F, when the lid of the cooler box is opened, or when the lid is opened and food is put therein, the temperature inside the cooler box gradually rises. Accordingly, when the temperature of the cold storage material reaches the melting point Tm of the cold storage material, the temperature of the cold storage material is maintained around the melting point Tm of the cold storage material. Refer to a zone G in FIG. 1. If there is no cold storage material inside the cooler box, the temperature inside the cooler box continuously rises as shown in a zone Z in FIG. 1. On the other hand, when the cold storage material is present inside the cooler box, the temperature inside the cooler box is maintained around the melting point of the cold storage material during a certain period of time, i.e., the zone G. In this manner, cool-keeping can be realized by cold heat stored in the cold storage material. At the end of the zone G, the crystal of the THF hydrate in the cold storage material melts and disappears. As a result, the THF hydrate liquefies in the cold storage material. When the time, i.e., the zone G, for which the cold storage material can keep the temperature around the melting point Tm, is longer, the cool-keeping performance of the cold storage material is higher.

Then, the temperature of the cold storage material containing the liquefied THF and the water rises to be equal to the ambient temperature. Refer to a zone H in FIG. 1.

The cold storage material can be cooled and reused.

For example, in order to apply a cold storage material using a clathrate hydrate to a cooler box that can have a perishable article or food thereinside, it is advantageous that the following requirement (I), requirement (II), and requirement (III) are satisfied.

Requirement (I) The melting point of the cold storage material is equivalent to or lower by several degrees Celsius than an appropriate temperature for the perishable article or food.

Requirement (II) The cold storage material has a latent heat of 225 J/g or more.

Requirement (III) The cold storage material is not liquid and has gelled.

In a case where the requirement (I) is satisfied, when the temperature inside the cooler box rises in accordance with the environmental temperature, the temperature inside the cooler box can be kept at the appropriate temperature or lower for the perishable article or the food, for a long period of time.

When the requirement (II) is satisfied, the cold storage material has a high latent heat. In the present description, latent heat means heat of fusion. For example, n-tetradecane having a melting point of 5.9°C has a latent heat of 229 J/g. n-pentadecane having a melting point of 9.9°C has a latent heat of 168 J/g. n-hexadecane having a melting point of 18.2°C has a latent heat of 229 J/g.

When the requirement (III) is satisfied, should the container of the cold storage material be damaged, the risk that the component of the cold storage material scatters over a wide range and contaminates the perishable article or food can be reduced.

The content of the thickening and gelling agent in the cold storage material is not limited to a specific value. The content thereof is 1% or more and 10% or less on a mass basis, for example.

In the cold storage material in Embodiment 1, the thickening and gelling agent is not limited to a specific aspect as long as the thickening and gelling agent includes the above main component. For example, the ratio of the amount of the locust bean gum to the total amount of the locust bean gum and the xanthan gum is not limited to a specific value. The ratio is 0.15 or more and 0.85 or less on a mass basis, for example. This ratio is desirably 0.2 or more and 0.8 or less, more desirably 0.2 or more and 0.7 or less, and further desirably 0.2 or more and less than 0.6. The ratio of the content of the xanthan gum to the total amount of the thickening and gelling agent is not limited to a specific value. For example, the ratio may be 0.6 or more on a mass basis, or the ratio may be less than 0.6. The thickening and gelling agent may include a component other than the main component, or may include only the main component. For example, the thickening and gelling agent may include a predetermined amount of a component other than the main component as long as the thickening and gelling agent has desired properties from the viewpoint of gel strength and suppression of syneresis. The content of the component other than the main component in the thickening and gelling agent is 20 mass% or less, for example. The content of the component other than the main component in the thickening and gelling agent may be 15 mass% or less, 10 mass% or less, 5 mass% or less, or 1 mass% or less.

The cold storage material in Embodiment 1 may contain only THF, water, and the thickening and gelling agent, or may contain a component other than THF, water, and the thickening and gelling agent. The cold storage material may contain an additive such as a supercooling inhibitor, a thickener, and an antiseptic agent. Meanwhile, desirably, the cold storage material is free of a synthetic polymer generated by crosslinking a polyacrylamide derivative, polyvinyl alcohol, sodium polyacrylate, or sodium polymethacrylate.

The cold storage material may further contain at least one silver compound selected from the group consisting of silver phosphate, silver carbonate, and silver oxide. Silver phosphate is represented by a chemical formula Ag₃PO₄. Silver carbonate is represented by a chemical formula Ag₂CO₃. Silver oxide is represented by a chemical formula AgO.

When the cold storage material contains the above silver compound, the molar ratio, in the cold storage material, of the content of the silver compound to the content of the water is not limited to a specific value. The molar ratio is 2.64×10⁻⁸ or more and 3.75×10⁻⁴ or less, for example.

When the cold storage material contains the above silver compound, the ratio, in the cold storage material, of the content of the silver compound to the total amount of the content of the THF, the content of the water, and the content of the thickening and gelling agent is not limited to a specific value. The ratio is 0.00050 or more and 0.020 or less on a mass basis, for example. The ratio may be 0.0010 or more and 0.010 or less on a mass basis.

The method for producing the cold storage material in Embodiment 1 is not limited to a specific method. The cold storage material in Embodiment 1 can be produced by mixing THF, water, and the thickening and gelling agent, and according to a process that includes heating and cooling, for example. A known process can be applied to this process.

The cold storage material can be provided in a state of being present inside a sealed container, as necessary. In this case, a mixture including THF, water, and the thickening and gelling agent or the cold storage material may be put in a container, and the container may be sealed.

### [1-2. Operation]

Operation and action of the cold storage material in Embodiment 1 will be described.

In use of the cold storage material, cold storage and cold release are repeated. During cold storage, a THF hydrate is generated from THF and water. During cold release, the THF hydrate melts. Therefore, for example, cool-keeping at 10°C or lower can be realized with use of the cold storage material.

The cold storage material contains the thickening and gelling agent and has gelled. Therefore, for example, should the container of the cold storage material be damaged during transportation of an article kept cool by the cold storage material, the cold storage material is less likely to scatter over a wide range and contaminate the article being transported. Thus, this cold storage material is advantageous from the viewpoint of safety during storage, keeping, and transportation.

In the cold storage material in Embodiment 1, the ratio of the content of the THF to the total amount of the content of the THF and the content of the water is 0.16 or more and 0.24 or less on a mass basis. Therefore, in this cold storage material, the content of the THF is adjusted to the congruent concentration or around the congruent concentration, and the latent heat of the cold storage material is likely to become large. This is because the heat of fusion of a cold storage material forming a clathrate hydrate is likely to become highest when the concentration of guest molecules is around the congruent concentration.

### [1-3. Effects, etc.]

As described above, in the present embodiment, the cold storage material contains THF, water, and the thickening and gelling agent. In this cold storage material, the ratio of the content of the THF to the total amount of the content of the THF and the content of the water is 0.16 or more and 0.24 or less on a mass basis. The thickening and gelling agent includes a main component composed only of locust bean gum and xanthan gum.

Accordingly, the cold storage material is likely to have desired gel strength and elasticity. In a gel that is poor in elasticity, the gel network contracts with lapse of time, and the space in the gel network becomes small. Therefore, syneresis of water stored in the space in the gel network is likely to occur. On the other hand, in a gel that has desired elasticity, such syneresis is less likely to occur. Therefore, the cold storage material is advantageous from the viewpoint of suppression of occurrence of syneresis during use while containing tetrahydrofuran.

As in the present embodiment, the thickening and gelling agent may be free of a synthetic polymer generated by crosslinking a polyacrylamide derivative, polyvinyl alcohol, sodium polyacrylate, or sodium polymethacrylate. Accordingly, the cold storage material is more likely to have desired gel strength and elasticity. Therefore, the cold storage material is more advantageous from the viewpoint of suppression of occurrence of syneresis during use while containing tetrahydrofuran.

As in the present embodiment, the ratio of the amount of the locust bean gum to the total amount of the locust bean gum and the xanthan gum may be 0.15 or more and 0.85 or less on a mass basis. Accordingly, the cold storage material is more likely to have desired gel strength and elasticity. Therefore, the cold storage material is more advantageous from the viewpoint of suppression of occurrence of syneresis during use while containing tetrahydrofuran.

As in the present embodiment, the content of the component other than the main component in the thickening and gelling agent may be 20 mass% or less. In such a case as well, the cold storage material can have desired gel strength and elasticity. Therefore, the cold storage material is more advantageous from the viewpoint of suppression of occurrence of syneresis during use while containing tetrahydrofuran.

As in the present embodiment, the cold storage material may further contain at least one silver compound selected from the group consisting of silver phosphate, silver carbonate, and silver oxide. Accordingly, an oxygen atom (hydrophilic group) in a THF molecule is more easily stabilized when coordinately-bonded to a silver atom of the silver compound than when hydrogen-bonded to a water molecule. Therefore, the proportion of coordinately-bonded THF molecules is likely to become large. The hydrophilic group of the coordinately-bonded THF molecule is coordinated to a silver atom, and the hydrophobic group of the THF molecule is surrounded by water. As a result, THF molecules enter a state appropriate for hydrophobic hydration. The oxygen atom in the silver-oxygen bond of the silver compound plays a role of stabilizing the coordinate bond. As a result, in the cold storage material, the probability that THF molecules and water molecules form a clathrate hydrate through molecular motion is likely to become high. Therefore, in the cold storage material, supercooling is likely to be suppressed. As a result, in the cold storage material, the temperature at which the THF hydrate is generated is likely to become high, and for example, the temperature becomes 0°C or higher. Accordingly, a clathrate hydrate of THF is likely to be formed without ice being formed.

As in the present embodiment, the silver compound may be silver phosphate. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

As in the present embodiment, the silver compound may be silver carbonate. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

As in the present embodiment, the silver compound may be silver oxide. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

As in the present embodiment, in the cold storage material, the molar ratio of the content of the silver compound to the content of the water may be 2.64×10⁻⁸ or more and 3.75×10⁻⁴. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

As in the present embodiment, in the cold storage material, the ratio of the content of the silver compound to the total amount of the content of the tetrahydrofuran, the content of the water, and the content of the thickening and gelling agent may be 0.00050 or more and 0.020 or less on a mass basis. This ratio may be 0.0010 or more and 0.010 or less on a mass basis. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

### (Embodiment 2)

Embodiment 2 will be described below.

### [2-1. Configuration]

A cold storage material in Embodiment 2 contains THF, water, and a thickening and gelling agent. The thickening and gelling agent includes a seed-derived polysaccharide and a microorganism-derived polysaccharide. The thickening and gelling agent can cause gelling through heating and cooling. For example, the thickening and gelling agent can cause gelling of a mixture containing THF, water, and the thickening and gelling agent, only through adjustment of temperature without adding cations. The cold storage material is determined to be solid by a solid-liquid determination test according to ASTM D 4359-90.

The seed-derived polysaccharide included in the thickening and gelling agent is not limited to a specific polysaccharide. Examples of the seed-derived polysaccharide include locust bean gum.

The microorganism-derived polysaccharide included in the thickening and gelling agent is not limited to a specific polysaccharide. Examples of the microorganism-derived polysaccharide include xanthan gum.

In the cold storage material in Embodiment 2, the thickening and gelling agent is not limited to a specific aspect as long as the thickening and gelling agent includes a seed-derived polysaccharide and a microorganism-derived polysaccharide. The thickening and gelling agent may include a plurality of types of polysaccharides. For example, in the cold storage material in Embodiment 2, the thickening and gelling agent may include locust bean gum and xanthan gum. In this case, the ratio of the content of the xanthan gum to the total amount of the thickening and gelling agent is not limited to a specific value. For example, the ratio may be 0.6 or more on a mass basis, or the ratio may be less than 0.6. For example, the ratio of the amount of the locust bean gum to the total amount of the locust bean gum and the xanthan gum is 0.15 or more and 0.7 or less on a mass basis, for example. This ratio may be 0.2 or more and 0.7 or less or may be 0.3 or more and 0.7 or less, on a mass basis.

In the cold storage material in Embodiment 2, the ratio of the content of the THF to the total amount of the content of the THF and the content of the water is not limited to a specific value. The ratio is 0.16 or more and 0.24 or less on a mass basis, for example.

The cold storage material in Embodiment 2 may contain only THF, water, and the thickening and gelling agent, or may contain a component other than THF, water, and the thickening and gelling agent. The cold storage material may contain an additive such as a supercooling inhibitor, a thickener, and an antiseptic agent. Meanwhile, desirably, the cold storage material is free of a synthetic polymer generated by crosslinking a polyacrylamide derivative, polyvinyl alcohol, sodium polyacrylate, or sodium polymethacrylate.

The cold storage material may further contain at least one silver compound selected from the group consisting of silver phosphate, silver carbonate, and silver oxide. Silver phosphate is represented by a chemical formula Ag₃PO₄. Silver carbonate is represented by a chemical formula Ag₂CO₃. Silver oxide is represented by a chemical formula AgO.

When the cold storage material contains the above silver compound, the molar ratio, in the cold storage material, of the content of the silver compound to the content of the water is not limited to a specific value. The molar ratio is 2.64×10⁻⁸ or more and 3.75×10⁻⁴ or less, for example.

When the cold storage material contains the above silver compound, the ratio, in the cold storage material, of the content of the silver compound to the total amount of the content of the THF, the content of the water, and the content of the thickening and gelling agent is not limited to a specific value. The ratio is 0.00050 or more and 0.020 or less on a mass basis, for example. The ratio may be 0.0010 or more and 0.010 or less on a mass basis.

The method for producing the cold storage material in Embodiment 2 is not limited to a specific method. The cold storage material in Embodiment 2 can be produced with reference to the method for producing the cold storage material in Embodiment 1.

### [2-2. Operation]

Operation and action of the cold storage material in Embodiment 2 will be described.

In use of the cold storage material, cold storage (generation of a THF hydrate) and cold release (melting of the THF hydrate) are repeated. Therefore, for example, cool-keeping at 10°C or lower can be realized with use of this cold storage material.

The cold storage material contains the thickening and gelling agent and has gelled. In addition, the cold storage material is determined to be solid by a solid-liquid determination test according to ASTM D 4359-90. Therefore, for example, should the container of the cold storage material be damaged during transportation of an article kept cool by the cold storage material, the cold storage material is less likely to scatter over a wide range and contaminate the article being transported. This cold storage material is advantageous from the viewpoint of safety during storage, keeping, and transportation.

### [2-3. Effects, etc.]

As described above, in the present embodiment, the cold storage material contains THF, water, and the thickening and gelling agent. The thickening and gelling agent includes a seed-derived polysaccharide and a microorganism-derived polysaccharide. The cold storage material is determined to be solid by a solid-liquid determination test according to ASTM D 4359-90.

Accordingly, the cold storage material is likely to have desired gel strength and elasticity. Therefore, the cold storage material is advantageous from the viewpoint of suppression of occurrence of syneresis during use while containing THF. In addition, the above thickening and gelling agent can cause gelling through heating and cooling, for example, and can cause gelling only through adjustment of temperature without adding cations. Therefore, depression of the freezing point associated with addition of cations can be avoided, and the melting point of the THF hydrate in the cold storage material is less likely to be low. In addition, the latent heat of the cold storage material is likely to become large. For example, the latent heat of the cold storage material is likely to be 225 J/g or more.

As in the present embodiment, the thickening and gelling agent may include locust bean gum and xanthan gum. In addition, the ratio of the content of the xanthan gum to the total amount of the thickening and gelling agent may be 0.6 or more on a mass basis. Further, the ratio of the amount of the locust bean gum to the total amount of the locust bean gum and the xanthan gum may be 0.15 or more and 0.7 or less on a mass basis. Accordingly, the cold storage material is more likely to have desired gel strength and elasticity. Therefore, the cold storage material is more advantageous from the viewpoint of suppression of occurrence of syneresis during use while containing THF.

As in the present embodiment, the cold storage material may further contain at least one silver compound selected from the group consisting of silver phosphate, silver carbonate, and silver oxide. Accordingly, THF molecules enter a state appropriate for hydrophobic hydration, and the probability that THF molecules and water molecules form a clathrate hydrate through molecular motion in the cold storage material is likely to become high. Therefore, in the cold storage material, supercooling is likely to be suppressed. As a result, in the cold storage material, the temperature at which the THF hydrate is generated is likely to become high, and for example, the temperature is likely to be 0°C or higher.

As in the present embodiment, the silver compound may be silver phosphate. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

As in the present embodiment, the silver compound may be silver carbonate. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

As in the present embodiment, the silver compound may be silver oxide. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

As in the present embodiment, in the cold storage material, the molar ratio of the content of the silver compound to the content of the water may be 2.64×10⁻⁸ or more and 3.75×10⁻⁴. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

As in the present embodiment, in the cold storage material, the ratio of the content of the silver compound to the total amount of the content of the THF, the content of the water, and the content of the thickening and gelling agent may be 0.00050 or more and 0.020 or less on a mass basis. This ratio may be 0.0010 or more and 0.010 or less on a mass basis. Accordingly, in the cold storage material, THF molecules enter a state appropriate for hydrophobic hydration, and the probability that THF molecules and water molecules form a clathrate hydrate through molecular motion is likely to become high. Therefore, in the cold storage material, supercooling is likely to be suppressed.

### (Embodiment 3)

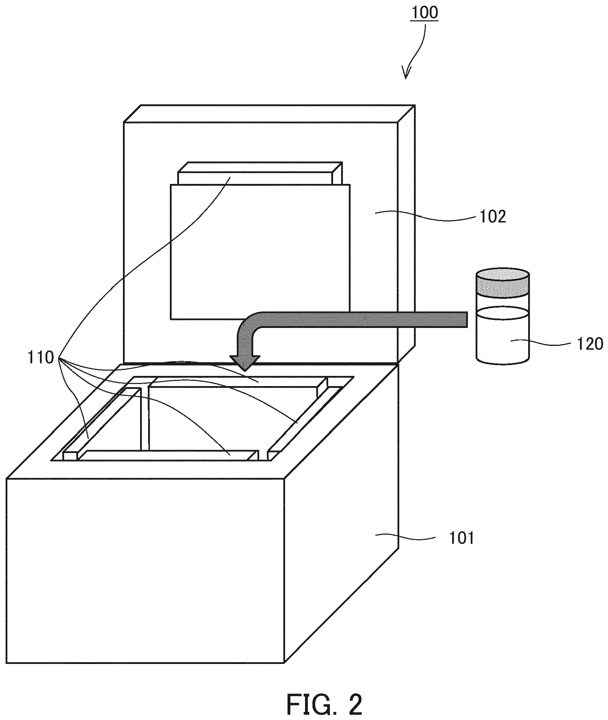

Embodiment 3 will be described below with reference to FIG. 2.

FIG. 2 shows a cooler box 100 in Embodiment 3.

The cooler box 100 includes: a thermal insulation box 101 having a bottom (not shown) and a side part; and a thermal insulation lid 102.

For example, the cold storage material in Embodiment 1 or 2 is disposed along at least one selected from the group consisting of the bottom face on the inner side of the thermal insulation box 101, a side face on the inner side of the thermal insulation box 101, and the face on the inner side of the thermal insulation lid 102. In FIG. 2, a cold storage material pack 110 including the cold storage material in Embodiment 1 or 2 is provided so as to be in contact with each of four side faces on the inner side of the thermal insulation box 101 having a rectangular parallelepiped shape.

The cold storage material in Embodiment 1 or 2 may be disposed in at least one selected from the group consisting of the inside of the bottom of the thermal insulation box 101, the inside of the side part of the thermal insulation box 101, and the inside of the thermal insulation lid 102. The cold storage material in Embodiment 1 or 2 may be disposed, in a state of being included in the cold storage material pack 110, in a space inside the cooler box 100. The space inside the cooler box 100 is, for example, a space formed by the bottom face on the inner side of the thermal insulation box 101, the side faces on the inner side of the thermal insulation box 101, and the face on the inner side of the thermal insulation lid 102.

The cold storage material in Embodiment 1 or 2 may be provided inside at least one selected from the group consisting of the side part of the thermal insulation box, the thermal insulation lid of the thermal insulation box, and the thermal insulation box itself. In this case as well, the cold storage material in Embodiment 1 or 2 may be disposed in a state of being included in the cold storage material pack 110.

At least one selected from the group consisting of medicine, biological tissues, cells, food, and flowers and ornamental plants is put into the thermal insulation box 101. The cold storage material in Embodiment 1 or 2 is used for storage, keeping, or transportation of items that need to be kept fresh, such as medicine, biological tissues, cells, food, and flowers and ornamental plants. For example, a medicine 120 is put into the thermal insulation box 101 shown in FIG. 2. Examples of the medicine include liquid medicines. Examples of the liquid medicine include vaccines. The cooler box in Embodiment 3 includes the cold storage material in Embodiment 1 or 2, and thus is appropriate for storage, keeping, or transportation of items that need to be kept fresh. Examples

The present disclosure will be described in more details with reference to Examples below.

In the Examples, tetrahydrofuran is abbreviated as "THF". The THF was purchased from Tokyo Chemical Industry Co., Ltd.

### (Example 1A-1)

As shown in Table 1, 0.38 g of polysaccharide, 1.83 g of THF, and 7.78 g of pure water were added to a 60-milliliter screw tube to obtain a mixture. The polysaccharide included locust bean gum and xanthan gum only, and the ratio of the amount of the locust bean gum to the total amount of the locust bean gum and the xanthan gum was 0.5 on a mass basis. The mixture was sufficiently stirred in the screw tube, was heated to 60°C, and then was allowed to cool naturally. In this manner, a cold storage material according to Example 1A-1 was obtained. In Example 1A-1, the mixture gelled only through heating and cooling. The screw tube was a glass tube having a lid with a screw. The content of the polysaccharide in the cold storage material was 4 mass%.

### (Measurement of melting point and latent heat)

Using a differential scanning calorimeter DSC-8500 manufactured by PerkinElmer Japan Co., Ltd., differential scanning calorimetry (DSC) was performed on about 10 milligrams of the cold storage material according to Example 1A-1. Temperature adjustment was performed as programed in advance, and then the following measurement was performed. First, the temperature of a reference substance was maintained at 20 degrees Celsius for 10 minutes. Next, the temperature of the reference substance was lowered at a rate of 1 degree Celsius/1 minute. In the course of cooling, temperature rise associated with generation of the THF hydrate in the cold storage material was observed as an exothermic peak, and then, the temperature of the cold storage material converged to a programed temperature. With this, completion of crystallization of the THF hydrate was confirmed. The temperature of the cold storage material at the start of the temperature rise of the cold storage material in this course of cooling was determined as a crystallization temperature Tc of the cold storage material. After the temperature of the reference substance reached minus 20 degrees Celsius, the temperature of the reference substance was maintained at minus 20 degrees Celsius for 10 minutes. Then, the temperature of the reference substance was raised at a rate of 1 degree Celsius/1 minute, from minus 20 degrees Celsius to 20 degrees Celsius. When melting of the THF hydrate starts, the amount of heat corresponding to the latent heat is absorbed. Therefore, change in the temperature of the cold storage material stagnated. Melting of the THF hydrate ended and change in the temperature of the cold storage material converged to the original temperature rise curve. The temperature at the endothermic peak in this case was defined as the melting point Tm, and the absorbed heat was determined as the latent heat. In this manner, using the differential scanning calorimeter DSC-8500, the melting point Tm and the latent heat of the cold storage material according to Example 1A-1 were determined. As a result, the melting point Tm of the cold storage material according to Example 1A-1 was 5.0 degrees Celsius, and the latent heat of the cold storage material was 240 J/g. The result is shown in Table 5.

### (Gel strength test)

The cold storage material according to Example 1A-1 was allowed to stand in a 40°C environment for four hours or more. Then, a screw tube containing the cold storage material according to Example 1A-1 was laid sideways (tilted by 90°) in a 40°C environment, and then, after lapse of three minutes, the state of the cold storage material was visually checked. Based on this result, the gel strength of the cold storage material was evaluated according to the criteria below. The result is shown in Table 5.
A: no deformation is observed at the interface between the cold storage material and air, and the cold storage material vertically extends.
B: a relatively small deformation is observed at the interface between the cold storage material and air.
C: a relatively large deformation is observed at the interface between the cold storage material and air.

### (Evaluation of syneresis)

The cold storage material according to Example 1A-1 was allowed to stand in a 40°C environment for four hours. Then, a screw tube containing the cold storage material was laid sideways (tilted by 90°) in a 40°C environment, and then, after lapse of three minutes, the state of the cold storage material was visually checked. Based on this result, syneresis in the cold storage material was evaluated according to the criteria below. The result is shown in Table 5.

A: separation of a liquid component is not clearly observed.

NG: separation of a liquid component is clearly observed.

### (Example 1A-2)

A cold storage material according to Example 1A-2 was prepared in the same manner as in Example 1A-1, except for the following. Polysaccharide, THF, pure water, and silver oxide (II) were added in the amounts shown in Table 1. The silver oxide (II) was silver oxide (II) (Silver (II) Oxide) obtained from FUJIFILM Wako Pure Chemical Corporation, and was added as a supercooling inhibitor. With respect to the cold storage material according to Example 1A-2, the same evaluation as in Example 1A-1 was performed. The result is shown in Table 5.

### (Example 1A-3)

The cold storage material according to Example 1A-3 was prepared in the same manner as in Example 1A-1, except for the following. Polysaccharide, THF, pure water, and silver phosphate (I) were added in the amounts shown in Table 1. The silver phosphate (I) was silver phosphate (I) obtained from Mitsuwa Chemicals Co., Ltd., and was added as a supercooling inhibitor. With respect to the cold storage material according to Example 1A-3, the same evaluation as in Example 1A-1 was performed. The result is shown in Table 5.

### (Example 1A-4)

A cold storage material according to Example 1A-4 was prepared in the same manner as in Example 1A-1, except for the following. Polysaccharide, THF, pure water, and silver carbonate were added in the amounts shown in Table 1. The silver carbonate was silver carbonate obtained from FUJIFILM Wako Pure Chemical Corporation, and was added as a supercooling inhibitor. With respect to the cold storage material according to Example 1A-4, the same evaluation as in Example 1A-1 was performed. The result is shown in Table 5.

### (Example 1B-1)

A cold storage material according to Example 1B-1 was prepared in the same manner as in Example 1A-1, except for the following. Polysaccharide, THF, and pure water were added in the amounts shown in Table 1. With respect to the cold storage material according to Example 1B-1, the same evaluation as in Example 1A-1 was performed. The result is shown in Table 5.

### (Example 1B-2)

A cold storage material according to Example 1B-2 was prepared in the same manner as in Example 1A-2, except for the following. Polysaccharide, THF, pure water, and silver oxide (II) were added in the amounts shown in Table 1. With respect to the cold storage material according to Example 1B-2, the same evaluation as in Example 1A-1 was performed. The result is shown in Table 5.

### (Example 1B-3)

A cold storage material according to Example 1B-3 was prepared in the same manner as in Example 1A-3, except for the following. Polysaccharide, THF, pure water, and silver phosphate (I) were added in the amounts shown in Table 1. With respect to the cold storage material according to Example 1B-3, the same evaluation as in Example 1A-1 was performed. The result is shown in Table 5.

### (Example 1B-4)

A cold storage material according to Example 1B-4 was prepared in the same manner as in Example 1A-4, except for the following. Polysaccharide, THF, pure water, and silver carbonate were added in the amounts shown in Table 1. With respect to the cold storage material according to Example 1B-4, the same evaluation as in Example 1A-1 was performed. The result is shown in Table 5.

### (Example 2A-1)

A cold storage material according to Example 2A-1 was prepared in the same manner as in Example 1A-1, except for the following. Polysaccharide, THF, and pure water were added in the amounts shown in Table 2. The polysaccharide included locust bean gum and xanthan gum only, and the ratio of the amount of the locust bean gum to the total amount of the locust bean gum and the xanthan gum was 0.4 on a mass basis. With respect to the cold storage material according to Example 2A-1, the same evaluation as in Example 1A-1 was performed. The result is shown in Table 5.

### (Example 2A-2)

A cold storage material according to Example 2A-2 was prepared in the same manner as in Example 2A-1, except for the following. Polysaccharide, THF, pure water, and silver oxide (II) were added in the amounts shown in Table 2. With respect to the cold storage material according to Example 2A-2, the same evaluation as in Example 1A-1 was performed. The result is shown in Table 5.

### (Example 2A-3)

A cold storage material according to Example 2A-3 was prepared in the same manner as in Example 2A-1, except for the following. Polysaccharide, THF, pure water, and silver phosphate (I) were added in the amounts shown in Table 2. With respect to the cold storage material according to Example 2A-3, the same evaluation as in Example 1A-1 was performed. The result is shown in Table 5.

### (Example 2A-4)

A cold storage material according to Example 2A-4 was prepared in the same manner as in Example 2A-1, except for the following. Polysaccharide, THF, pure water, and silver carbonate were added in the amounts shown in Table 2. With respect to the cold storage material according to Example 2A-4, the same evaluation as in Example 1A-1 was performed. The result is shown in Table 5.

### (Example 2B-1)

A cold storage material according to Example 2B-1 was prepared in the same manner as in Example 2A-1, except for the following. Polysaccharide, THF, and pure water were added in the amounts shown in Table 2. With respect to the cold storage material according to Example 2B-1, the same evaluation as in Example 1A-1 was performed. The result is shown in Table 5.

### (Example 2B-2)

A cold storage material according to Example 2B-2 was prepared in the same manner as in Example 2A-2, except for the following. Polysaccharide, THF, pure water, and silver oxide (II) were added in the amounts shown in Table 2. With respect to the cold storage material according to Example 2B-2, the same evaluation as in Example 1A-1 was performed. The result is shown in Table 5.

### (Example 2B-3)

A cold storage material according to Example 2B-3 was prepared in the same manner as in Example 2A-3, except for the following. Polysaccharide, THF, pure water, and silver phosphate (I) were added in the amounts shown in Table 2. With respect to the cold storage material according to Example 2B-3, the same evaluation as in Example 1A-1 was performed. The result is shown in Table 5.

### (Example 2B-4)

A cold storage material according to Example 2B-4 was prepared in the same manner as in Example 2A-4, except for the following. Polysaccharide, THF, pure water, and silver carbonate were added in the amounts shown in Table 2. With respect to the cold storage material according to Example 2B-4, the same evaluation as in Example 1A-1 was performed. The result is shown in Table 5.

### (Example 2C-1)

A cold storage material according to Example 2C-1 was prepared in the same manner as in Example 1A-1, except for the following. Polysaccharide, THF, and pure water were added in the amounts shown in Table 2. The polysaccharide included locust bean gum and xanthan gum only, and the ratio of the amount of the locust bean gum to the total amount of the locust bean gum and the xanthan gum was 0.25 on a mass basis. With respect to the cold storage material according to Example 2C-1, the same evaluation as in Example 1A-1 was performed. The result is shown in Table 5.

### (Example 2C-2)

A cold storage material according to Example 2C-2 was prepared in the same manner as in Example 1A-2, except for the following. Polysaccharide, THF, pure water, and silver oxide (II) were added in the amounts shown in Table 2. With respect to the cold storage material according to Example 2C-2, the same evaluation as in Example 1A-1 was performed. The result is shown in Table 5.

### (Example 2C-3)

A cold storage material according to Example 2C-3 was prepared in the same manner as in Example 1A-3, except for the following. Polysaccharide, THF, pure water, and silver phosphate (I) were added in the amounts shown in Table 2. With respect to the cold storage material according to Example 2C-3, the same evaluation as in Example 1A-1 was performed. The result is shown in Table 5.

### (Example 2C-4)

A cold storage material according to Example 2C-4 was prepared in the same manner as in Example 1A-4, except for the following. Polysaccharide, THF, pure water, and silver carbonate were added in the amounts shown in Table 2. With respect to the cold storage material according to Example 2C-4, the same evaluation as in Example 1A-1 was performed. The result is shown in Table 5.

### (Example 2D-1)

A cold storage material according to Example 2D-1 was prepared in the same manner as in Example 2C-1, except for the following. Polysaccharide, THF, and pure water were added in the amounts shown in Table 2. With respect to the cold storage material according to Example 2D-1, the same evaluation as in Example 1A-1 was performed. The result is shown in Table 5.

### (Example 2D-2)

A cold storage material according to Example 2D-2 was prepared in the same manner as in Example 2C-2, except for the following. Polysaccharide, THF, pure water, and silver oxide (II) were added in the amounts shown in Table 2. With respect to the cold storage material according to Example 2D-2, the same evaluation as in Example 1A-1 was performed. The result is shown in Table 5.

### (Example 2D-3)

A cold storage material according to Example 2D-3 was prepared in the same manner as in Example 2C-3, except for the following. Polysaccharide, THF, pure water, and silver phosphate (I) were added in the amounts shown in Table 2. With respect to the cold storage material according to Example 2D-3, the same evaluation as in Example 1A-1 was performed. The result is shown in Table 5.

### (Example 2D-4)

A cold storage material according to Example 2D-4 was prepared in the same manner as in Example 2C-4, except for the following. Polysaccharide, THF, pure water, and silver carbonate were added in the amounts shown in Table 2. With respect to the cold storage material according to Example 2D-4, the same evaluation as in Example 1A-1 was performed. The result is shown in Table 5.

### (Example 2E-1)

A cold storage material according to Example 2E-1 was prepared in the same manner as in Example 1A-1, except for the following. Polysaccharide, THF, and pure water were added in the amounts shown in Table 3. The polysaccharide included locust bean gum and xanthan gum only, and the ratio of the amount of the locust bean gum to the total amount of the locust bean gum and the xanthan gum was 0.2 on a mass basis. With respect to the cold storage material according to Example 2E-1, the same evaluation as in Example 1A-1 was performed. The result is shown in Table 5.

### (Example 2E-2)

A cold storage material according to Example 2E-2 was prepared in the same manner as in Example 1A-2, except for the following. Polysaccharide, THF, pure water, and silver oxide (II) were added in the amounts shown in Table 3. With respect to the cold storage material according to Example 2E-2, the same evaluation as in Example 1A-1 was performed. The result is shown in Table 5.

### (Example 2E-3)

A cold storage material according to Example 2E-3 was prepared in the same manner as in Example 1A-3, except for the following. Polysaccharide, THF, pure water, and silver phosphate (I) were added in the amounts shown in Table 3. With respect to the cold storage material according to Example 2E-3, the same evaluation as in Example 1A-1 was performed. The result is shown in Table 5.

### (Example 2E-4)

A cold storage material according to Example 2E-4 was prepared in the same manner as in Example 1A-4, except for the following. Polysaccharide, THF, pure water, and silver carbonate were added in the amounts shown in Table 3. With respect to the cold storage material according to Example 2E-4, the same evaluation as in Example 1A-1 was performed. The result is shown in Table 5.

### (Example 2F-1)

A cold storage material according to Example 2F-1 was prepared in the same manner as in Example 2E-1, except for the following. Polysaccharide, THF, and pure water were added in the amounts shown in Table 3. With respect to the cold storage material according to Example 2F-1, the same evaluation as in Example 1A-1 was performed. The result is shown in Table 5.

### (Example 2F-2)

A cold storage material according to Example 2F-2 was prepared in the same manner as in Example 2E-2, except for the following. Polysaccharide, THF, pure water, and silver oxide (II) were added in the amounts shown in Table 3. With respect to the cold storage material according to Example 2F-2, the same evaluation as in Example 1A-1 was performed. The result is shown in Table 5.

### (Example 2F-3)

A cold storage material according to Example 2F-3 was prepared in the same manner as in Example 2E-3, except for the following. Polysaccharide, THF, pure water, and silver phosphate (I) were added in the amounts shown in Table 3. With respect to the cold storage material according to Example 2F-3, the same evaluation as in Example 1A-1 was performed. The result is shown in Table 5.

### (Example 2F-4)

A cold storage material according to Example 2F-4 was prepared in the same manner as in Example 2E-4, except for the following. Polysaccharide, THF, pure water, and silver carbonate were added in the amounts shown in Table 3. With respect to the cold storage material according to Example 2F-4, the same evaluation as in Example 1A-1 was performed. The result is shown in Table 5.

### (Comparative Example 1)

A cold storage material according to Comparative Example 1 was prepared in the same manner as in Example 1A-1, except for the following. As the polysaccharide, guar gum was used. Guar gum, THF, and pure water were added in the amounts shown in Table 4. In Comparative Example 1, a mixture of the guar gum, the THF, and the pure water was heated to 60°C, and then was allowed to cool naturally. In Comparative Example 1, gelling was not able to be caused only through heating and cooling. With respect to the cold storage material according to Comparative Example 1, the same evaluation as in Example 1A-1 was performed. The result is shown in Table 6.

### (Comparative Example 2)

A cold storage material according to Comparative Example 2 was prepared in the same manner as in Example 1A-1, except for the following. As the polysaccharide, Low-Acyl (LA) gellan gum was used. LA gellan gum is also called deacylation-type gellan gum. LA gellan gum, THF, and pure water were added in the amounts shown in Table 4. In Comparative Example 2, a mixture of the LA gellan gum, the THF, and the pure water was heated to 40°C, and then was allowed to cool naturally. In Comparative Example 2, gelling was not able to be caused only through heating and cooling, and addition of calcium lactate (calcium ions) was necessary. With respect to the cold storage material according to Comparative Example 2, the same evaluation as in Example 1A-1 was performed. The result is shown in Table 6.

### (Comparative Example 3)

A cold storage material according to Comparative Example 3 was prepared in the same manner as in Example 1A-1, except for the following. As the polysaccharide, agar was used. The agar and pure water were added in the amounts shown in Table 4. In Comparative Example 3, a mixture of the agar and the pure water was heated to 90°C, and then was allowed to cool naturally. Then, THF was added in the amount shown in Table 4, and then the resultant mixture was further stirred and then left to stand. With respect to the cold storage material according to Comparative Example 3, the same evaluation as in Example 1A-1 was performed. The result is shown in Table 6.

### (Comparative Example 4)

A cold storage material according to Comparative Example 4 was prepared in the same manner as in Comparative Example 3, except for the following. Instead of the agar, a mixture of guar gum and agar was used. The content of the agar in this mixture was 50 mass%. The mixture of the guar gum and the agar, and pure water were added in the amounts shown in Table 4. In Comparative Example 4, the mixture of the guar gum, the agar, and the pure water was heated to 90°C, and then was allowed to cool naturally. Then, THF was added in the amount shown in Table 4, and the resultant mixture was further stirred and then left to stand. With respect to the cold storage material according to Comparative Example 4, the same evaluation as in Example 1A-1 was performed. The result is shown in Table 6.

### (Comparative Example 5)

A cold storage material according to Comparative Example 5 was prepared in the same manner as in Comparative Example 3, except for the following. Instead of the agar, a mixture of guar gum and agar was used. The content of the agar in this mixture was 80 mass%. The mixture of the guar gum and the agar, and pure water were added in the amounts shown in Table 4. In Comparative Example 5, the mixture of the guar gum, the agar, and the pure water was heated to 90°C, and then was allowed to cool naturally. Then, THF was added in the amount shown in Table 4, and the resultant mixture was further stirred and then left to stand. With respect to the cold storage material according to Comparative Example 5, the same evaluation as in Example 1A-1 was performed. The result is shown in Table 6.

### (Comparative Example 6)

A cold storage material according to Comparative Example 6 was prepared in the same manner as in Example 1A-1, except for the following. Sodium polyacrylate was added in addition to polysaccharide, THF, and pure water in the amounts shown in Table 4. The sodium polyacrylate was a sodium polyacrylate manufactured by FUJIFILM Wako Pure Chemical Corporation: Poly(acrylic acid), sodium salt, 20% soln. In water [MW up to 225,000]. With respect to the cold storage material according to Comparative Example 6, the same evaluation as in Example 1A-1 was performed. The result is shown in Table 6.

### (Comparative Example 7)

A cold storage material according to Comparative Example 7 was prepared in the same manner as in Example 1A-1, except for the following. Sodium polyacrylate was added in addition to polysaccharide, THF, and pure water in the amounts shown in Table 4. With respect to the cold storage material according to Comparative Example 7, the same evaluation as in Example 1A-1 was performed. The result is shown in Table 6.

**[Table 1]**

| | Polysaccharide | | | | THF | Pure water |
|---|---|---|---|---|---|---|
| | Type | Mass ratio of locust bean gum to total amount of polysaccharide | Addition amount [g] | Content [mass%] | Addition amount [g] | Addition amount [g] |
| Example 1A-1 | Locust bean gum + Xanthan gum Mass ratio 1:1 | 0.5 | 0.38 | 4 | 1.83 | 7.78 |
| Example 1A-2 | | 0.5 | 0.38 | 4 | 1.83 | 7.77 |
| Example 1A-3 | | 0.5 | 0.38 | 4 | 1.83 | 7.77 |
| Example 1A-4 | | 0.5 | 0.38 | 4 | 1.83 | 7.77 |
| Example 1B-1 | | 0.5 | 0.20 | 2 | 1.87 | 7.93 |
| Example 1B-2 | | 0.5 | 0.20 | 2 | 1.87 | 7.92 |
| Example 1B-3 | | 0.5 | 0.20 | 2 | 1.87 | 7.92 |
| Example 1B-4 | | 0.5 | 0.20 | 2 | 1.87 | 7.92 |

**[Table 1] (cont.)**

| | Mass ratio of THF to total amount of THF and pure water | Supercooling inhibitor | | Molar ratio of supercooling inhibitor to pure water | Mass ratio of supercooling inhibitor to total amount of THF, pure water, and polysaccharide |
|---|---|---|---|---|---|
| | | Type | Addition amount [g] | | |
| Example 1A-1 | 0.19 | None | - | - | - |
| Example 1A-2 | 0.19 | AgO | 0.02 | 3.75×10⁻⁴ | 0.0020 |
| Example 1A-3 | 0.19 | Ag₃PO₄ | 0.02 | 1.11×10⁻⁴ | 0.0020 |
| Example 1A-4 | 0.19 | Ag₂CO₃ | 0.02 | 1.68×10⁻⁴ | 0.0020 |
| Example 1B-1 | 0.19 | None | - | - | - |
| Example 1B-2 | 0.19 | AgO | 0.02 | 3.67×10⁻⁴ | 0.0020 |
| Example 1B-3 | 0.19 | Ag₃PO₄ | 0.02 | 1.09×10⁻⁴ | 0.0020 |
| Example 1B-4 | 0.19 | Ag₂CO₃ | 0.02 | 1.65×10⁻⁴ | 0.0020 |

**[Table 2]**

| | Polysaccharide | | | | THF | Pure water |
|---|---|---|---|---|---|---|
| | Type | Mass ratio of locust bean gum to total amount of polysaccharide | Addition amount [g] | Content [mass%] | Addition amount [g] | Addition amount [g] |
| Example 2A-1 | Locust bean gum + Xanthan gum | 0.4 | 0.38 | 4 | 1.83 | 7.78 |
| Example 2A-2 | | 0.4 | 0.38 | 4 | 1.83 | 7.77 |
| Example 2A-3 | | 0.4 | 0.38 | 4 | 1.83 | 7.77 |
| Example 2A-4 | | 0.4 | 0.38 | 4 | 1.83 | 7.77 |
| Example 2B-1 | | 0.4 | 0.20 | 2 | 1.87 | 7.93 |
| Example 2B-2 | Mass ratio 2:3 | 0.4 | 0.20 | 2 | 1.87 | 7.92 |
| Example 2B-3 | | 0.4 | 0.20 | 2 | 1.87 | 7.92 |
| Example 2B-4 | | 0.4 | 0.20 | 2 | 1.87 | 7.92 |
| Example 2C-1 | Locust bean gum + Xanthan gum | 0.25 | 0.38 | 4 | 1.83 | 7.78 |
| Example 2C-2 | | 0.25 | 0.38 | 4 | 1.83 | 7.77 |
| Example 2C-3 | | 0.25 | 0.38 | 4 | 1.83 | 7.77 |
| Example 2C-4 | | 0.25 | 0.38 | 4 | 1.83 | 7.77 |
| Example 2D-1 | | 0.25 | 0.29 | 3 | 1.85 | 7.86 |
| Example 2D-2 | Mass ratio 1:3 | 0.25 | 0.29 | 3 | 1.85 | 7.84 |
| Example 2D-3 | | 0.25 | 0.29 | 3 | 1.85 | 7.84 |
| Example 2D-4 | | | 0.29 | 3 | 1.85 | 7.84 |

**[Table 2] (cont.)**

| | Mass ratio of THF to total amount of THF and pure water | Supercooling inhibitor | | Molar ratio of supercooling inhibitor to pure water | Mass ratio of supercooling inhibitor to total amount of THF, pure water, and polysaccharide |
|---|---|---|---|---|---|
| | | Type | Addition amount [g] | | |
| Example 2A-1 | 0.19 | None | - | - | - |
| Example 2A-2 | 0.19 | AgO | 0.02 | 3.75×10⁻⁴ | 0.0020 |
| Example 2A-3 | 0.19 | Ag₃PO₄ | 0.02 | 1.11×10⁻⁴ | 0.0020 |
| Example 2A-4 | 0.19 | Ag₂CO₃ | 0.02 | 1.68×10⁻⁴ | 0.0020 |
| Example 2B-1 | 0.19 | None | - | - | - |
| Example 2B-2 | 0.19 | AgO | 0.02 | 3.67×10⁻⁴ | 0.0020 |
| Example 2B-3 | 0.19 | Ag₃PO₄ | 0.02 | 1.09×10⁻⁴ | 0.0020 |
| Example 2B-4 | 0.19 | Ag₂CO₃ | 0.02 | 1.65×10⁻⁴ | 0.0020 |
| Example 2C-1 | 0.19 | None | - | - | - |
| Example 2C-2 | 0.19 | AgO | 0.02 | 3.75×10⁻⁴ | 0.0020 |
| Example 2C-3 | 0.19 | Ag₃PO₄ | 0.02 | 1.11×10⁻⁴ | 0.0020 |
| Example 2C-4 | 0.19 | Ag₂CO₃ | 0.02 | 1.68×10⁻⁴ | 0.0020 |
| Example 2D-1 | 0.19 | None | - | - | - |
| Example 2D-2 | 0.19 | AgO | 0.02 | 3.71×10⁻⁴ | 0.0020 |
| Example 2D-3 | 0.19 | Ag₃PO₄ | 0.02 | 1.10×10⁻⁴ | 0.0020 |
| Example 2D-4 | 0.19 | Ag₂CO₃ | 0.02 | 1.67×10⁻⁴ | 0.0020 |

**[Table 3]**

| | Polysaccharide | | | | THF | Pure water |
|---|---|---|---|---|---|---|
| | Type | Mass ratio of locust bean gum to total amount of polysaccharide | Addition amount [g] | Content [mass%] | Addition amount [g] | Addition amount [g] |
| Example 2E-1 | Locust bean gum + Xanthan gum | 0.2 | 0.38 | 4 | 1.83 | 7.78 |
| Example 2E-2 | | 0.2 | 0.38 | 4 | 1.83 | 7.77 |
| Example 2E-3 | | 0.2 | 0.38 | 4 | 1.83 | 7.77 |
| Example 2E-4 | | 0.2 | 0.38 | 4 | 1.83 | 7.77 |
| Example 2F-1 | | 0.2 | 0.29 | 3 | 1.85 | 7.86 |
| Example 2F-2 | | 0.2 | 0.29 | 3 | 1.85 | 7.84 |
| Example 2F-3 | Mass ratio 1:4 | 0.2 | 0.29 | 3 | 1.85 | 7.84 |
| Example 2F-4 | | 0.2 | 0.29 | 3 | 1.85 | 7.84 |

**[Table 3] (cont.)**

| | Mass ratio of THF to total amount of THF and pure water | Supercooling inhibitor | | Molar ratio of supercooling inhibitor to pure water | Mass ratio of supercooling inhibitor to total amount of THF, pure water, and polysaccharide |
|---|---|---|---|---|---|
| | | Type | Addition amount [g] | | |
| Example 2E-1 | 0.19 | None | - | - | - |
| Example 2E-2 | 0.19 | AgO | 0.02 | 3.75×10⁻⁴ | 0.0020 |
| Example 2E-3 | 0.19 | Ag₃PO₄ | 0.02 | 1.11×10⁻⁴ | 0.0020 |
| Example 2E-4 | 0.19 | Ag₂CO₃ | 0.02 | 1.68×10⁻⁴ | 0.0020 |
| Example 2F-1 | 0.19 | None | - | - | - |
| Example 2F-2 | 0.19 | AgO | 0.02 | 3.71×10⁻⁴ | 0.0020 |
| Example 2F-3 | 0.19 | Ag₃PO₄ | 0.02 | 1.10×10⁻⁴ | 0.0020 |
| Example 2F-4 | 0.19 | Ag₂CO₃ | 0.02 | 1.67×10⁻⁴ | 0.0020 |

**[Table 4]**

| | Polysaccharide | | | THF | Pure water |
|---|---|---|---|---|---|
| | Type | Addition amount [g] | Content [mass%] | Addition amount [g] | Addition amount [g] |
| Comparative Example 1 | Guar gum | 0.38 | 4 | 1.83 | 7.78 |
| Comparative Example 2 | LA Gellan gum | 0.38 | 4 | 1.83 | 7.78 |
| Comparative Example 3 | Agar | 0.38 | 4 | 1.83 | 7.78 |
| Comparative Example 4 | Guar gum + Agar Mass ratio 1:1 | 0.38 | 4 | 1.83 | 7.78 |
| Comparative Example 5 | Guar gum + Agar Mass ratio 1:4 | 0.38 | 4 | 1.83 | 7.78 |

| | Polysaccharide and sodium polyacrylate | | | THF | Pure water |
|---|---|---|---|---|---|
| | Type | Addition amount [g] | Content [mass%] | Addition amount [g] | Addition amount [g] |
| Comparative Example 6 | Locust bean gum + Xanthan gum + Sodium polyacrylate Mass ratio 1:1:2.5 | 1.35 | 4.3 | 5.7 | 24.28 |
| Comparative Example 7 | Locust bean gum + Xanthan gum + Sodium polyacrylate Mass ratio 1:1:3 | 1.5 | 4.8 | 5.7 | 24.28 |

**[Table 4] (cont.)**

| | Mass ratio of THF to total amount of THF and pure water | Supercooling inhibitor | |
|---|---|---|---|
| | | Type | Addition amount [g] |
| Comparative Example 1 | 0.19 | None | - |
| Comparative Example 2 | 0.19 | None | - |
| Comparative Example 3 | 0.19 | None | - |
| Comparative Example 4 | 0.19 | None | - |
| Comparative Example 5 | 0.19 | None | - |

| | Mass ratio of THF to total amount of THF and pure water | Supercooling inhibitor | |
|---|---|---|---|
| | | Type | Addition amount [g] |
| Comparative Example 6 | 0.19 | None | - |
| Comparative Example 7 | 0.19 | None | - |

**[Table 5]**

| | Gelling through heating and cooling | Syneresis | Gel strength | Latent heat [J/g] | Melting point Tm [°C] | Crystallization temperature Tc [°C] |
|---|---|---|---|---|---|---|
| Example 1A-1 | OK | A | A | 240 | 5 | -20 |
| Example 1A-2 | OK | A | A | 240 | 5 | 1 |
| Example 1A-3 | OK | A | A | 240 | 5 | 1 |
| Example 1A-4 | OK | A | A | 240 | 5 | 0 |
| Example 1B-1 | OK | A | A | 245 | 5 | -20 |
| Example 1B-2 | OK | A | A | 245 | 5 | 2 |
| Example 1B-3 | OK | A | A | 245 | 5 | 2 |
| Example 1B-4 | OK | A | A | 245 | 5 | 1 |
| Example 2A-1 | OK | A | A | 240 | 5 | -20 |
| Example 2A-2 | OK | A | A | 240 | 5 | 2 |
| Example 2A-3 | OK | A | A | 240 | 5 | 2 |
| Example 2A-4 | OK | A | A | 240 | 5 | 1 |
| Example 2B-1 | OK | A | A | 245 | 5 | -20 |
| Example 2B-2 | OK | A | A | 245 | 5 | 3 |
| Example 2B-3 | OK | A | A | 245 | 5 | 3 |
| Example 2B-4 | OK | A | A | 245 | 5 | 2 |
| Example 2C-1 | OK | A | A | 243 | 5 | -20 |
| Example 2C-2 | OK | A | A | 243 | 5 | 2 |
| Example 2C-3 | OK | A | A | 243 | 5 | 2 |
| Example 2C-4 | OK | A | A | 243 | 5 | 1 |
| Example 2D-1 | OK | A | A | 245 | 5 | -20 |
| Example 2D-2 | OK | A | A | 245 | 5 | 3 |
| Example 2D-3 | OK | A | A | 245 | 5 | 3 |
| Example 2D-4 | OK | A | A | 245 | 5 | 2 |
| Example 2E-1 | OK | A | A | 243 | 5 | -20 |
| Example 2E-2 | OK | A | A | 243 | 5 | 2 |
| Example 2E-3 | OK | A | A | 243 | 5 | 2 |
| Example 2E-4 | OK | A | A | 243 | 5 | 1 |
| Example 2F-1 | OK | A | A | 245 | 5 | -20 |
| Example 2F-2 | OK | A | A | 245 | 5 | 3 |
| Example 2F-3 | OK | A | A | 245 | 5 | 3 |
| Example 2F-4 | OK | A | A | 245 | 5 | 2 |

**[Table 6]**

| | Gelling through heating and cooling | Syneresis | Gel strength | Latent heat [J/g] | Melting point Tm [°C] | Crystallization temperature Tc [°C] |
|---|---|---|---|---|---|---|
| Comparative Example 1 | NG | NG | C | 240 | 5 | -20 |
| Comparative Example 2 | NG | NG | C | 240 | 5 | -20 |
| Comparative Example 3 | OK | NG | C | 240 | 5 | -20 |
| Comparative Example 4 | OK | NG | C | 240 | 5 | -20 |
| Comparative Example 5 | OK | NG | C | 240 | 5 | -20 |
| Comparative Example 6 | OK | NG | C | 239 | 5 | -20 |
| Comparative Example 7 | OK | NG | C | 238 | 5 | -20 |

As shown in Table 5, the gel strength of the cold storage material according to each Example was good. In addition, in the cold storage material according to each Example, syneresis was not clearly observed, and it was shown that, although the cold storage material according to each Example contains THF, syneresis is less likely to occur during use. 1L (liter) of a sample of the cold storage material was prepared so as to have the same mass ratio of each component in the cold storage material according to each Example, and a solid-liquid determination test according to ASTM D 4359-90 was performed. As a result, the cold storage material according to each Example was determined to be solid.

Meanwhile, it was difficult to say that the gel strength of the cold storage material according to each Comparative Example was good. In addition, in the cold storage material according to each Comparative Example, syneresis was clearly observed, and it was shown that, in the cold storage material according to each Comparative Example, syneresis is prone to occur during use. It is inferred that, in the combination of THF and the polysaccharide in the cold storage material according to each Comparative Example, the elasticity of the gel is poor. In Comparative Examples 1 and 2, gelling was not able to be caused only through heating and cooling, and in Comparative Example 2, addition of cations or the like was necessary. There is a concern that such addition of cations may cause depression of the freezing point. Comparative Examples 3 to 5 require heating to 90°C for gelling of the mixture of the polysaccharide and pure water. This heating temperature is higher than the boiling point of THF. If such heating is performed in the presence of THF, there is a possibility that THF boils and properties of the cold storage material may be impaired. Comparison of Example 1B-1 with Comparative Examples 6 and 7 suggests that addition of sodium polyacrylate is not desirable from the viewpoint of syneresis and gel strength. Comparison of Comparative Example 6 with Comparative Example 7 suggests that when the content of sodium polyacrylate is larger, the amount of syneresis accordingly increases, and the gel strength decreases.

As shown in Table 5, through comparison and the like of Example 1A-1 with Example 1A-2 to Example 1A-4, it is understood that, when a predetermined silver compound is added as a supercooling inhibitor, the crystallization temperature Tc of the cold storage material is likely to be high. For example, the crystallization temperature of the cold storage material is improved from a low temperature of minus 20 degrees Celsius to a high temperature of 0 degrees Celsius or higher and 3 degrees Celsius or lower.

### INDUSTRIAL APPLICABILITY

The cold storage material according to the present disclosure can be used for storage, keeping, or transportation of items that need to be kept fresh, such as medicine, biological tissues, cells, food, and flowers and ornamental plants.

## Claims

1. A cold storage material comprising:
tetrahydrofuran;
water; and
a thickening and gelling agent, wherein
a ratio of a content of the tetrahydrofuran to a total amount of the content of the tetrahydrofuran and a content of the water is 0.16 or more and 0.24 or less on a mass basis, and
the thickening and gelling agent includes a main component composed only of locust bean gum and xanthan gum.

2. The cold storage material according to claim 1, wherein
the cold storage material is free of a synthetic polymer generated by crosslinking a polyacrylamide derivative, polyvinyl alcohol, sodium polyacrylate, or sodium polymethacrylate.

3. The cold storage material according to claim 1, wherein
a ratio of an amount of the locust bean gum to a total amount of the locust bean gum and the xanthan gum is 0.15 or more and 0.85 or less on a mass basis.

4. The cold storage material according to claim 1, wherein
a content of a component other than the main component in the thickening and gelling agent is 20 mass% or less.

5. The cold storage material according to claim 1, further comprising
at least one silver compound selected from the group consisting of silver phosphate represented by a chemical formula Ag₃PO₄, silver carbonate represented by a chemical formula Ag₂CO₃, and silver oxide represented by a chemical formula AgO.

6. The cold storage material according to claim 5, wherein
the silver compound is the silver phosphate.

7. The cold storage material according to claim 5, wherein
the silver compound is the silver carbonate.

8. The cold storage material according to claim 5, wherein
the silver compound is the silver oxide.

9. The cold storage material according to claim 5, wherein
a molar ratio of a content of the silver compound to the content of the water is 2.64×10⁻⁸ or more and 3.75×10⁻⁴ or less.

10. The cold storage material according to claim 5, wherein
a ratio of a content of the silver compound to a total amount of the content of the tetrahydrofuran, the content of the water, and a content of the thickening and gelling agent is 0.00050 or more and 0.020 or less on a mass basis.

11. The cold storage material according to claim 10, wherein
the ratio of the content of the silver compound to the total amount of the content of the tetrahydrofuran, the content of the water, and the content of the thickening and gelling agent is 0.0010 or more and 0.010 or less on a mass basis.

12. A cold storage material comprising:
tetrahydrofuran;
water; and
a thickening and gelling agent, wherein
the thickening and gelling agent includes a seed-derived polysaccharide and a microorganism-derived polysaccharide, and
the cold storage material is determined to be solid by a solid-liquid determination test according to ASTM D 4359-90.
